# EUROPEAN PATENT SPECIFICATION

(11) **EP 0 610 226 B1**
(45) Date of publication and mention of the grant of the patent: **04.10.2000**
(21) Application number: 92919131.0
(22) Date of filing: 10.07.1992
(51) Int. Cl.: G05D 16/20

(54) **COMPRESSED AIR CONTROL SYSTEM**
Druckluftregeleinrichtung
SYSTEME DE REGULATION D'AIR COMPRIME

(30) Priority: 10.07.1991 US 727985
(43) Date of publication of application: 17.08.1994
(73) Proprietor: CONSERVAIR TECHNOLOGIES, Kenosha, WI 53142 (US)
(72) Inventor: MIREL, Robert, J., Scarsdale, NY 10583 (US); WILSON, Robert, E., So. Norwalk, CT 06854 (US); HUNT, E., Charles, White Plain, NY 10605 (US)
(74) Representative: Carpenter, David
(86) International application number: PCT/US92/05779
(87) International publication number: WO 93/01539

(56) References cited:
- WO-A-86/06515
- FR-A- 2 635 883
- US-A- 4 034 774
- US-A- 4 241 750
- US-A- 4 992 952
- US-A- 5 093 080
- NAVY TECHNICAL DISCLOSURE BULLETIN vol. 11, no. 2, December 1985, ARLINGTON US pages 58 - 64 SCHNEIDER W.E. 'Digital logic hydraulic control valve & system'

## Description

### TECHNICAL FIELD

The present invention relates to control systems for pneumatic plant supplies and is particularly, although not exclusively, concerned with an improved air control system for compressed air supplies used to power industrial or commercial equipment, and to a complete air system which integrates such air control system with air compressor means and useful air-powered equipment.

### BACKGROUND

Many factories use compressed air as a major source of power for operating their production machinery. The air is typically supplied from on-site or nearby compressors and piped to a downstream use or demand area through a distribution system, with pressure-stabilizing storage means being provided upstream, in the form of tanks or receivers. Typical equipment includes pneumatically powered machine tools, drills, wrenches, presses and lathes, as well as mills and buffers, and low demand spray booths and instrumentation. Such equipment is commonly referred to in the art as the "article", a generic term connoting anything connected to the air system to make use of the supply.

End users want the air system to maintain adequate pressure to run their air-powered equipment and few consider the energy costs of the air.

Major changes in downstream demand create varying loads on the compressors. Air compressors are typically controlled according to system supply pressure, coming on-line as system pressure at the compressor, or nearby, drops below a threshold pressure and going off-line at a higher cutout pressure. This is necessarily a rather crude control system, especially as air compressors are slow to respond to changes. As factory production drops off, for example at the end of a shift, air demand declines, and this decline can be quite sudden.

System pressure rises substantially to unload compressor horsepower until compressor output can be adjusted and this overpressure can increase the air consumption rate as still-operating machinery uses more air and also increases leakage. These overpressure losses constitute an artificial demand resulting in wasted energy. Being designed to maintain a threshold working pressure under conditions of heavy demand, most air systems use an excess of compressor capacity over the theoretical capacity needed to give satisfactory operational results, with consequent unnecessary capital expenditure and running costs.

Prior art pneumatic control systems generally depend upon the above-described crude compressor switching together with pressure regulators operating at the article to protect individual pieces of equipment from pressure surges. Such regulators can be controlled from downstream pressure detectors with a feedback loop and typically discharge overpressures to atmosphere.

In general, the prior art uses local control with little if any thought given to overall system control. In general, the prior art has paid little, if any attention to overall system efficiency. Indeed, it has been a surprising observation relating to the genesis of the present invention that most operators set their regulator valves to maximum, probably in the belief that they will get more performance out of their equipment. Such operators display little regard for system efficiency and equipment durability.

These rather simple control devices merely provide a preliminary level of control and do little if anything to improve the overall system efficiency. Other substantial drawbacks associated with the use of such downstream flow controllers are that mechanical and pneumatic inertia, or hysteresis, slow the responsiveness of the system allowing, substantial abnormalities and consequent air, or energy, losses to develop.

GB 2029513 and US Re 29383 disclose arrangements which include air control systems having a plurality of control sub-units arranged in parallel to one another, each air control system being provided between a source of compressed air and an air demand, the air control system being arranged to control air flow therebetween.

US 4241750 discloses an arrangement for use in controlling the fluid pressure applied to a controlled system for use in a laboratory environment, the arrangement including a valve arrangement controlling the supply of fluid under pressure to the controlled system and a vent controlling the escape of fluid from the controlled system.

It is an object of the present invention to provide an improved pneumatic control system for compressed air supplies which can reduce the energy consumption of a variable-demand compressed-air system.

Another objective of this invention is to provide an improved pneumatic control system for compressed air supplies which control system is responsive and fast-acting.

A further object of the invention is to provide an improved pneumatic control system for compressed air supplies which control system can increase the useful work loads that can be placed on a supply system without increasing compressor capacity.

Yet another object of this invention is to provide an improved pneumatic control system for compressed air systems which can balance the air system by more closely matching supply to useful demand capacity than has heretofore been possible.

A still further object of the present invention is to provide an improved pneumatic control system for compressed air supplies which can reduce wastage of air or compressor energy.

Another object of the present invention is to provide an improved pneumatic control system for compressed air supplies which is adaptable to control high air flow ratings at peak demands yet capable of course of accurate control of much smaller off-peak loadings with greatly reduced flow rates.

The invention provides a remedy for one or more of the problems encountered with prior art systems.

According to the present invention there is provided an air control system for a main conduit of a substantially continuous flow compressed air system, the compressed air system comprising compressed air supply means providing an air supply, air-operated equipment served by said compressed air supply means and providing an air demand and a main air supply conduit connected between said compressed air supply means and said air-operated equipment to channel said air supply to said air demand, said air supply being subject to fluctuation according to variations in said air supply means and in said air demand wherein said air control system comprises:
a) a variable adjustable flow control unit for controlling air flow through said main air supply conduit, in use, said flow control unit comprising a plurality of flow sub-units in parallel configuration;
b) pressure monitoring means downstream of said flow control unit and arranged to generate a pressure related demand signal, said demand signal fluctuating over time as a function of variations in said pressure; and
c) actuator means for operating said flow control unit in response to said demand signal to stabilize downstream air pressure thereby varying said air flow rate in said main air conduit according to downstream pressure variations; the flow control unit further comprising a by-pass sub-unit openable in response to a predetermined pressure difference across said flow control unit to provide a substantially free-flow by-pass airway; the system further including available volumetric air capacity for storage upstream of said main air supply conduit; the air control system being characterized in that the air system is of the type in which air-weight flow is controlled, each sub-unit being variable to control air flow therethrough; and said flow control unit is operative to constrain supply in said volumetric air capacity to prevent indiscriminate release of stored air, wherein each of said sub-units provides an independent air way between said air supply and said air demand, each said sub-units having its own flow controller and said sub-units being adjusted co-operatively and sequentially for jointly controlling said air flow, a plurality of the sub-units being pneumatically interconnected and arranged to operate in unison, opening and closing to the same degree in response to the application of a given control signal.

The invention also relates to a compressed air system including such a control system.

The air control system of this invention is thus positioned intermediately between the supply and the demand in a position where upstream storage capacity can be utilized for buffering purposes to smooth the balance between supply and demand. This upstream storage capacity can be derived not just from receivers, but also from pipes, driers and any other volumetric capacity in the upstream system.

In bigger air systems, there will be a plurality of compressors, which may number into the tens or more, and of course a considerable number and variety of downstream, demand equipment which can easily exceed tens and may number into hundreds of pieces of equipment supplied by a distribution network of branch lines.

The downstream demand can be sensed by a pressure transmitter, said actuator means operating the flow controllers in response to said pressure fluctuations so as to smooth the demand on the compressed air supply.

In this manner, the control unit of the invention is provided with a number of control sub-units each providing independent airways or circuits between the air source and the air demand, and each having its own flow controller. The air circuits should be parallel in a pneumatic sense and preferably are parallel in a mechanical sense. More than two circuits can be used and some or all of these can be coupled to be operated, or have their flow controllers driven, in unison or in harness.

The use of a plurality of parallel-circuited flow controllers has distinct advantages over a single, more massive flow controller similarly placed. The size of equipment needed to manage air flow ratings of the order of tens of thousands of cubic feet per minute (cfm) introduces major hysteresis lags and inertia losses. Furthermore, such a unit lacks redundancy provisions and cannot be expected to control small off-peak flows in a sensitive manner.

In a particularly advantageous embodiment, two or three or more control sub-units are thus coupled to handle peak demand, while a further, trim sub-unit is provided for effective control of much smaller off-peak loads, the coupled sub-units being shut-down during periods of very low demand, for example at night. The trim sub-unit can, of course also contribute to the control of peak loads.

In addition to the control sub-units, the airways preferably also comprise a fail-open by-pass sub-unit which, in preferred embodiments of the invention, can be controlled to provide several useful functions distinct from those of the control sub-units, for instance, dampening surges and regulating back pressure.

In the preferred practice of the invention the manifolds are designed to offer little or no resistance to air flow through them, providing free and easy distribution of air between the airways of the inventive control system and the supply and demand conduits. The manifolds can comprise header tanks extending transversely of the control airways and the supply and demand conduits. If the header tanks are generously proportioned, they not only will facilitate free air flow but can also contribute valuable air-storage capacity for buffering purposes. Assuming them to be elongated in a transverse direction and to have a substantially uniform transverse cross-section, by being, for example cylindrical, their individual cross-sectional areas can, with advantage, clearly exceed the cross-sectional areas of the respective supply and demand conduits with which they communicate, preferably by a margin of at least 20 percent.

The use of header tanks in this manner facilitates a sturdy, integral construction which, if the sub-units are generally of self-supporting metal pipe construction, is braced by the sub-units extending between the header tanks.

Although not the only possible configuration, this arrangement is advantageous in that it can be conveniently adapted for retro-fitting to existing air systems to be readily inserted as an intermediate unit in a section of trunk pipe in the air system. For this purpose the air control system can be provided with opposed, outwardly disposed and aligned supply and demand ports matched to the trunk pipe to be coupled thereto.

A typical compressed air power system comprises air compressors constituting the compressed-air source, receiving vessels, heat exchangers and distribution piping as well as the useful equipment or machinery that is driven by the compressed air and constitutes the demand. One or more of the control units of this invention can be installed in such a system and is preferably located in a main feeder or trunk pipe as close, in terms of volumetric capacity, as practicable, to the demand, subject to adequate pipe diameters in the system. In most situations, only one control unit will be appropriate so that it will be located in a, or more probably the, main feeder or trunk. However, large air systems may benefit from a plurality of control units: one to each of a number of main branch conduits.

By locating the control unit in a downstream position, unique characteristics of the invention provide special advantages which lead to a more balanced and economical air system. More specifically, the upstream volumetric capacity comprising besides the compressors, any receivers, upstream piping, heat exchangers and other upstream equipment, can be converted by the system of the invention into useful primary storage, providing valuable pressure-buffering capacity which contributes greatly to the overall balance of the system, under a diversity of conditions, improving its efficiency.

Furthermore, the downstream distribution piping system, with the demand equipment, can be controlled to operate at a more constant pressure than was heretofore possible. Indeed, it is an important benefit of this invention that the demand pressure can for the most part, while ignoring strictly local transient effects as equipment is brought on and off line, be constrained within a surprisingly narrow range, greatly improving the operating efficiency and stability of the system to the satisfaction of users and management alike.

### BRIEF DESCRIPTION OF THE DRAWINGS

One way of carrying out the invention is described in detail below with reference to the drawings which illustrate only one specific embodiment of the invention and in which:-
Figure 1 is a schematic view, which may be read in elevation or in plan, of one embodiment of an air supply control system according to this invention and from which various electronic and sensor sub-systems have been omitted for clarity;
Figure 2 is a view similar to Figure 1, of another embodiment of the invention, with some possible electronic and sensor sub-systems shown schematically, similar components using the same reference numerals as in the Figure 1 embodiment;
and Figure 3 (added July 10, 1992) is a view similar to Figure 2 of a further embodiment of the invention in which multiple control units are employed in conjnuction with banks of compressors to manage their loading and unloading more efficiently.

### BEST MODE FOR CARRYING OUT THE INVENTION

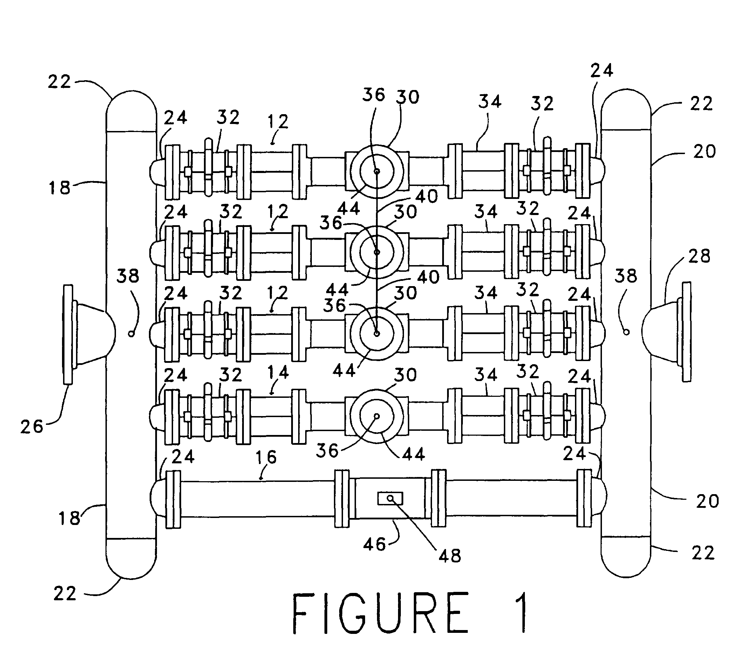

Referring to Figure 1, the air supply control unit is indicated generally at 10 and comprises three main air control sub-units 12, a trim air control sub-unit 14 and a by-pass sub-unit 16. The sub-units 12, 14 and 16 are each in the form of a pipe carrying various control devices, to be described, and each extends in a generally parallel manner between a pair of perpendicularly disposed header tanks 18 and 20 with which the sub-units 14 and 16 are in free communication, providing controlled airways therebetween.

Header tanks 18 and 20 can be welded steel cylindrical tanks with domed end caps 22, and are provided with an array of flanged sub-unit ports 24 aligned along one side. On an opposite side, the tank 18 has a flanged inlet port 26 to mate with an air supply trunk conduit (not shown) and to receive compressed air. Similarly, tank 20 has, on a side opposite its array of ports 24, a flanged outlet port 28 mateable with an air delivery conduit (not shown), which delivery conduit leads to the air-powered equipment or machinery served by the system. Tank 18 thus becomes an upstream manifold while tank 20 becomes a downstream manifold.

Each air control sub-unit 12 and 14 is equipped in its mid-section with a flow controller 30 and at its ends with a pair of service valves 32 to isolate it from header tank 18 or 20. Upstream of the downstream service valve 32, each sub-unit 12 and 14 has a one-way check valve 34 to prevent back flow through the airway or circuit provided by the sub-unit, from the demand to the source.

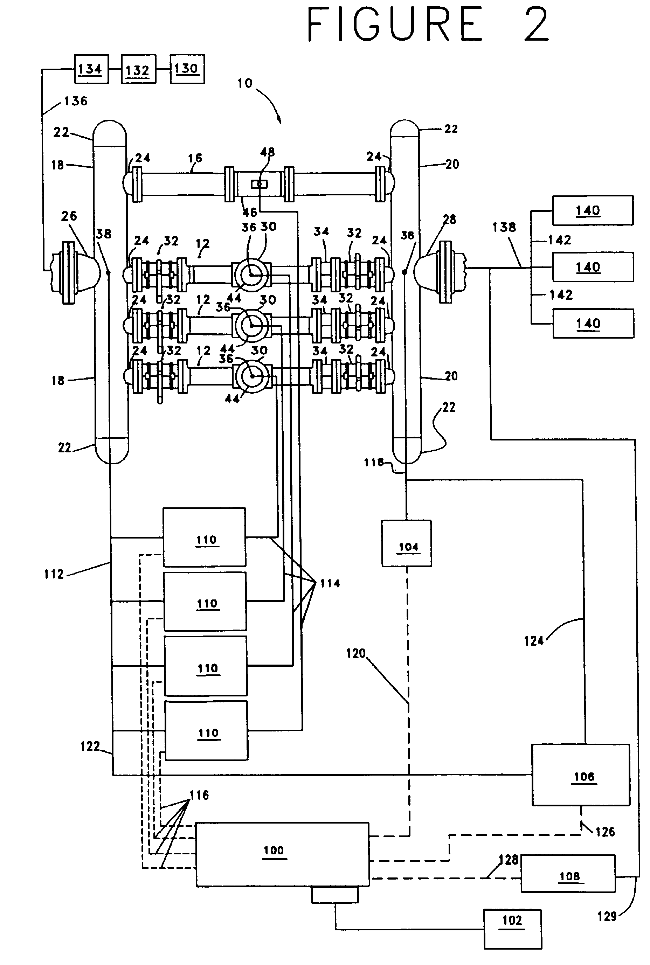

Each flow controller 30 has a pilot air port 36 for a pneumatic control line (not shown in Figure 1) linking the flow controller to a pneumatic sensing and actuating system which will be more fully described in connection with Figure 2. Pilot air ports 38, one to each, serve a similar role for the header tanks 18 and 20. The flow controllers 30 are preferably driven by servos indicated schematically (in keeping with other elements of the system) at 44. The servos 44 are preferably actuated and controlled by pneumatic signals received through the pilot ports 36 in the preferred management sub-system of the invention which employs electropneumatic transducers. With advantage, the flow controllers 30 have valve elements that are spring-biased to a closed position. However, in alternative embodiments providing some of the benefits of the invention, the pneumatic aspects of the management system can be substantially by electronic, fluidic or even manual elements, the servos 44 being actuated by an electronic signal.

As indicated schematically by the common line 40, the three flow controllers 30 of the three main air control sub-units 12 are operated in unison, receiving similar control signals and opening and closing to a similar extent, as those signals are applied. The trim sub-unit 14 and its controller 30 operate independently of the main sub-units 12. These three main air sub-units 12 could with some advantage be operated in response to pressure differentials or pressure levels by a more or less direct mechanical drive or even with some manual intervention, but such mechanical or manual management system would be far less efficient than the preferred electropneumatic management system to be described.

By-pass sub-unit 16 is equipped with a motorized by-pass valve 46 having a further small servo air port 48 and is installed in an independent, but parallel, air circuit between the headers 18 and 20. It is preferably fail-safe, being biased to an open position in response to loss of servo pressure or other system failures. Motorization of the by-pass valve 46 enables it to fulfil a number of useful functions to be described.

Each flow controller 30 is a slave unit in the overall control system and is designed to have small or lightweight moving actuator elements to minimize internal mechanical inertia in the flow-controller's valve train and consequent hysteresis lags. The flow controllers 30 should also be designed to maximize the flow capacity of the controller 30 in relation to its size, thereby to minimize flow resistance, and pressure drops across the flow controller. They should be free-flow, without constriction in the wide-open position. Diaphragm-type gate regulators with feedback control are suitable, for example the R18 series of pilot operated regulators supplied by C. A. Norgren Co., Littleton, CO.

While stock flow controllers may be usable in practicing this invention, the preferred practice to meet the objectives disclosed herein is to modify such flow controllers or regulators to reduce their flow resistance and any pressure drop across them. This can be done by using lighter springs than stock, plugging any leaks or exhausts, polishing and other techniques familiar to those skilled in the art, including changing or modifying flow control elements to be lighter or to offer a fuller throat in the wide-open position. Also or alternatively, the logic circuits, to be described, can be adapted to compensate for pressure losses across the flow controllers, once their values have been determined. Such modifications can also be directed to reducing the mechanical inertia in the valve or regulator and to increasing the speed of response, all of which considerations affect overall efficiency.

The issue of reduction of pressure losses is important because the control system is an introduced system that must justify its presence by appropriate savings. These will not be achieved if the control system introduces significant energy losses by way of pressure drops. Moreover, there is little pressure available for control purposes. A typical supply pressure may be in the range of 200 to 244 kPa (90 to 110 psig). If the regulator drops 89 N (20 lb) or so, as some do, it will impede equipment performance.

The servos 44 preferably operate against spring means biasing the flow controller or valve 30 into a closed position. Suitable servo or pneumatic valve positioned units are supplied by Cashco, Inc. Elsworth KS, for example their #48 and #148 series actuators which have a rolling diaphragm, multi-spring construction. These are available in fail-open or fail-close constructions. Fail close is suitable for the flow controllers 30 while a fail-open model can be used as the motor unit for motorized by-pass valve 46.

The check valves 34 are intended to prevent back flow and should be high-quality valves that are sensitive to small back pressures and seal efficiently, preferably bubble-tight.

The service valves 32 should ensure minimum flow restrictions, providing a full-bore flow path, and serve to isolate an individual air-control sub-unit 12 or 14 for maintenance or replacement. A full-port ball design is an example of a suitable design. With the multiple path arrangement shown, individual air control sub-units 12 or 14 can be taken down while the others are in service, avoiding shut-downs for maintenance.

Service valve isolation is not normally necessary for the by-pass sub-unit 16, but can be supplied if desired. Preferably, the by-pass valve 46 is controlled to maintain a predetermined pressure difference across the air control system 10, to prevent an instantaneous flow rate increase and attendant depletion of upstream storage below desired pressure thresholds that may trigger premature compressor start-up.

The arrangement shown in Figure 1 is, in the most preferred embodiment of this invention, constructed to be self-supporting and rigid. It will be appreciated that the generally recti-linear layout of a plurality of airways extending between cylindrical headers 18 and 20 facilitates this objective. The somewhat planar or laminar construction with a modest depth and much greater width and height and an overall, more-or-less rectangular configuration is especially convenient for retrofitting in a variety of situations in a convenient and compact manner. The air control system can readily be installed as an integral unit in a horizontal or vertical position, with little, if any additional support means such as brackets or struts assuming the mating air supply and delivery lines are solidly supported at, or near the inlet and outlet ports 26 and 28.

A sturdy or solid, self-supporting, integral structure of the air supply control unit 10 is promoted by the use of appropriately rated steel pipe for the pipe elements of the sub-units 12, 14 and 16, with flanged connections to and between the operative components of the sub-units 12, 14 and 16, and by a welded, flanged steel construction of the sub-unit ports 24 on the headers 18 and 20. These arrays of aligned ports 24 help resist rotational and twisting stresses.

In one practical and exemplary embodiment which should of course be understood to be non-limiting as to the scope of the invention, and which is suitable for managing a normal peak air flow capacity or rating of about 14.2 m³/s (3,000 cfm), the air supply and delivery conduits of the air system, and therefore the inlet and outlet ports 26 and 28 of the air control system of the invention, have internal diameters of 76 mm (3 inches) which the sub-units 12, 14 and 16 have internal diameters of about 63 mm (2.5 inches) each. The header tanks 18 and 20 suitably are about 1,220 mm (48 inches) long or high and about 102 mm (4 inches) in diameter with the width of the system 10 across the inlet and outlet ports 26 and 28 being about 1,370 mm (54 inches). These dimensions give the header tanks 18 and 20 a volume of the order of about 9.5 litres (580 cubic inches). With careful choice of the operative components, the depth can be constrained to about 460 mm (18 inches).

The embodiment of Figure 2 shows a modified air control unit 10 having three main air control sub-units 12, a by-pass sub-unit 16 disposed on the other side of the sub-units 12 from the Figure 1 position, but lacking any trim sub-unit 14.

Shown schematically in line-and-box fashion is an electropneumatic management system employing air sensors and servos and digital or analog signal processing. This is a preferred regime which lends itself to computer interfacing, especially to a PC or a PC network and can function effectively with a modicum of human intervention.

This management system, which will shortly be described in more detail, has its own novel and inventive characteristics and constitutes the best currently known means for managing the air control unit 10 or an air system in which an air control unit 10 is installed. However, it is not, of course, the only possible management system that can be used while still gaining benefits from the novel and inventive characteristics of the air-control unit 10. Simpler systems, perhaps employing more manual intervention, will occur to those skilled in the art. On the other hand, it can be expected that advances in the relevant arts of process management, signal processing and sensor design will yield improved management systems that better exploit the advantages of the invention or inventions disclosed herein.

Referring now to the particular management sub-system depicted in Figure 2, this sub-system comprises a brain in the form of a small logic controller 100, an operator interface 102, sensors in the form of a pressure transmitter 104, a differential pressure transmitter 106 and a mass-flow meter 108, as well as four parallel-connected electropneumatic transducers 110. These components communicate through a bi-partite nervous system comprising on the pneumatic side, small gauge, high grade air lines, for example 6.25 mm (¼ inch) reinforced plastic with brass terminations and on the electrical or electronic side by conductor wires of adequate gauge to carry, for example, 4 to 20 mA signal currents without noticeable attenuation.

The nervous system includes a common air bleed line 112 which runs from port 38 in upstream header tank 18 and applies the pressure therein to the four electropneumatic transducers 110, one each of which is connected in independent parallel circuit by an air line 114 to the three flow controllers 30 in the main air-control sub-units 12, and to the motorized by-pass valve 116 in the by-pass sub-unit 16. The electropneumatic transducers 110 are separately actuated by signals received over individual conductors 116 and each has an air output line 118 coupled to port 36 of a flow controller 30 or port 48 of the motorized by-pass valve 46. In this manner, the electropneumatic transducers 110 can apply pressurized air from header tank 18 to drive or actuate the flow controller 30 or the by-pass valve 48 in accordance with electrical control signals received from the small logic controller 100.

A suitable, sensitive electropneumatic transducer 110 designed for precision valve-actuation applications, is supplied by Fairchild Controls, for example their T6000 series of miniature transducers which transmit a pneumatic signal which is linearly proportional to a DC input, for example, a 4 to 20 mA control signal. These products are also field reversible permitting the output to be inversely proportional to the input signal.

The pressure transmitter 104 reads the pressure in downstream header tank 20 from air port 38 via air line 118 and sends a corresponding output signal to the small logic controller 100 via a conductor 120. A suitable pressure transmitter is a variable capacitance sensor generating a 4 to 20 mA signal output with a sensitivity of at least 1 percent. Setra Systems, Inc., Acton MA supplies such a transducer in its model 206/207 line with an advertized sensitivity of about 0.13%.

Differential pressure transmitter 106 receives air pressure inputs from the upstream header tank 18 via an air line 122 and from the downstream header tank 20 via an air line 124 and puts out a difference signal, reflecting the pressure difference between the tanks 18 and 20, to the small logic controller 100 via a conductor 126.

The mass flow meter 108 preferably is connected just downstream of the intermediately mounted air control unit 10 as indicated by the line 129 and its output signal, preferably an analog current signal in the 4 to 20 mA range, goes to the small logic controller via a conductor 128. The mass flow meter can be any sensitive device capable of accurate flow measurements in a conduit without undue loss of pressure across it.

A preferred mass flow meter produces a temperature-compensated output for which purpose it can include a temperature sensor to determine air temperature within the conduit and to track fluctuations in that temperature. A suitable mass flow meter is of the insertion type and comprises a heated probe residing in the air flow. The cooling effect of the air flow is measured to determine the rate of mass or weight flow. Sensitivities of 5 percent or less of full scale, preferably under 2 percent, with a flow time response under 5 seconds, preferably under 2 seconds, are desirable. Suitable such mass flow meters are supplied by Sierre Instruments under the trade mark "Accu-Flo". These instruments offer flow rate ranges up to 61 m/s (12,000 standard feet per minute) with a full scale accuracy of about 1 percent and a flow time response of about 0.2 seconds. More accurate determinations of flow through a large duct subject to turbulence can be obtained by the use of an array of mass flow meter probes disposed around the duct. Such a system is supplied by Sierra Instruments under the trade mark "Sting". Such an array system can accurately average the outputs of the probes.

Bearing in mind the potential cash savings and return on investment the air control system of this invention can bring, the hardware used should be of high quality to be durable and reliable, and in the case of the sensors and controllers, sensitive and accurate, as well as fast acting.

Further, it is desirable that the pressure transmitter 104 and the differential pressure transmitter 106 are able to put out real-time signals that are accurate reflections not just of static pressures at sample intervals, but are real-time reports of pressure fluctuations on a sub-second, better still, milli-second basis. Thus, a preferred output from the pressure transmitter 104 and the differential pressure transmitter 106 is dynamic and is at least a first order differential with respect to time of the static pressure, or pressure difference (transmitter 106), to provide some forecast of the amplitude of pressure change. Further advantage will derive from a second differential pressure output which can be useful in forecasting the speed at which a future pressure amplitude will be reached.

Also shown schematically in Figure 2 are the connection of air compressors 130 and associated heat exchangers 132 and receivers 134 to the upstream header tank 18 through an air-supply trunk conduit 136. In a comparable manner, compressed air is delivered from the downstream header tank 20 through a delivery conduit 138 to multiple working equipment 140 via an air distribution system indicated schematically by lines 142.

Clearly, the apparatus of the invention, notably the air control unit 10 can be operated in a number of different ways according to the management algorithms used in the small logic controller 100, if such is employed.

Accordingly, the air control unit 10 can be operated in a simple or a more sophisticated manner.

Broadly stated, the management sub-system described senses downstream air demand as reflected primarily by the pressure history at the downstream header tank 20, although further benefits may accrue from adding sensors in the distribution system downstream of the header tank 20, especially in the vicinity of critical or high-demand equipment, and adjusts the flow controllers to stabilize downstream air pressure. This stabilization improves the efficiency of air use, leading to energy savings and better equipment performance and durability.

By rapidly closing any open flow controller 30 as demand falls, for example as equipment is shut off, the compressor load that would otherwise surge downstream to be dissipated through air leaks and inefficient, overpressure operation of the remaining on-line equipment, is contained upstream, buffered in storage provided by the header tank 18, the receivers 134, heat exchangers 132 and upstream piping, including the supply conduit 136. This isolation of the upstream surge quickly generates a back-pressure on the compressors leading to their early cutout as threshold pressure is sensed at the compressor. Such desirable energy-saving, early cutout is promoted not just by the fact of the closing of the flow controllers 30 but also by the swiftness with which they are closed, using the air control system of this invention. The reduced demand can now be supplied from the pressurized upstream storage capacity, augmented by storage in the air-control system of the invention, providing further savings as start up of the compressors is deferred.

In a preferred embodiment, the small logic controller 100 employs a loop controller receiving constant input of the downstream demand pressure, and its time-based fluctuations, from the pressure transmitter 104 together with constant input from the differential pressure transmitter 106 which, by comparison monitoring yields an upstream storage pressure signal. These inputs are integrated over time to yield a mass-flow signal which serves as the basis for an output to the electropneumatic transducers 110. The output signal is processed to provide a derivative proportional to mass flow and to fluctuations therein, which is suitably biased to allow the electropneumatic transducers 110 to drive the flow controllers 30 against spring closing.

The processing algorithms preferably also include input from temperature sensors to provide temperature compensation of the pressure signals and permit the computation of accurate air-weight flows.

This processing system can also be a multiple loop system having individual loops, one for each flow controller 30, and a different loop for the by-pass valve 46. When employed with the embodiment of Figure 1, these process control loops can be operated in unison for the main sub-units 12 with a different algorithm for the trim sub-unit 14. This different algorithm will still have the trim sub-unit tracking weight-based air-flow demand, as accurately as possible, desirably in harness with the main sub-units 12 for maximal air demands, while including procedures to operate only the trim sub-unit at low demand levels, for example below 25 to 40% of maximum rating.

Such a multi-loop primary logic control can be closely integrated with the complete air system, including the source air compressors, by including remote pressure or flow change inputs, for example from the compressor environs, which inputs can be used to introduce compensatory adjustments, for example to allow for a lagging control response imposed by the air compressor. This integrated system approach is of particular value when dynamic compressors are used for the base load.

The small logic controller 100 can conveniently be incorporated in a console mounted separately from or on or nearby the air control unit 10 and could be incorporated with the operator interface 102 which can include a keyboard and monitor as well as other manual controls. This console can also include a selection of optional instrumentation, for example: an electronic pressure dewpoint monitor with an adjustable alarm to warn of excess humidity; a digital flow rate display; calibrated pressure gauges; and a variety of other indicating and alerting means for high and low pressures, power on, bypass ready, excess hydrocarbon and so on.

Especially in a busy environment with frequent changes in air demand, swift response is vital to the efficiency of this control system to ensure that the flow controllers 30 are in step with actual demand, not lagging it. Even quite small lags could leave a control system badly out of step with equipment such as a pneumatic ram operated in short bursts, leading to significant losses downstream if the flow controllers are open when the equipment is off line. The control system of this invention includes a number of features that promote response time and reduce lags.

In particular, by means of the invention, it is possible to actuate the flow controllers 30, or selected ones thereof, to move with a speed reflecting the rate of change of air demand. This feature can be achieved using a sensed pressure signal which is at least a first order time differential, or using a direct mass flow sensor signal. Preferably, the speed of the mechanical action of the flow controllers is directly proportional to the rate of change of demand so that there is little or no overshoot or undershoot of the set pressure.

Contributing greatly to these ends is the use of a plurality of parallel air-control circuits provided by the sub-units 12 and 14. Where, as in preferred embodiments, the diameter of each sub-unit's flow path is from 10 to 33% less than that of the inlet port 26 and the outlet port 28, better still from 15 to 20% less, then any pair of sub-units will provide between them a greater flow section than the conduits 136 and 138, allowing full flow with the flow controllers 30 short of their wide-open positions, where they have better responsiveness. In contrast with a putative, single, more massive control sub-unit, the moving elements and valve trains of the smaller, parallel clustered controllers 30 of this invention have an individual lower inertial mass enabling them to respond faster. In addition the valve elements of the flow controllers 30, while spring-biased to a closed position are carefully adjusted and calibrated to a minimum effective closing pressure so as to minimize pressure build-ups across the flow controller 30 before it opens.

To match falling system demand, the logic controller 100 reduces servo pressure to the individual main flow controllers 30 proportionately to the drop in air mass flow by an appropriate signal to the electropneumatic transducers 110. Ultimately, the main flow controllers are shut off as required to maintain stabilized control authority.

To prevent a mass flow overload, the combined open gateways of the main flow controllers can be limited to a predetermined maximum. As an additional override feature, should the upstream pressure drop below a threshold value, the flow controllers can be temporarily driven in an opposite sense to close as pressure drops, so as to protect upstream storage from excessive depletion.

As already implied and indicated, the by-pass valve 46 can protect against several eventualities. Firstly, it provides fail-safe protection to ensure that the control unit introduces no degradations into the air system, by failing open in the event of loss of primary control power. Further circumstances in which it can desirably be opened by an actuating signal from the small logic controller 100 or a remote host computer are:
i) If the demand pressure falls below a field-adjustable threshold value while the supply pressure is adequate.
ii) The differential pressure across the header tanks 18 and 20 exceeds a threshold.
iii) Or for independent management reasons.

Furthermore, the by-pass valve can be modulated to accommodate system anomalies, for example, it can be used to assist in back-pressure control to prevent a demand surge drawing down the system, by switching control authority for the valve from the downstream sensors to an upstream pressure signal.

This facility is important for what is known as event management. An event is usually a known situation or set of circumstances that put what may be regarded as abnormal stresses on the air system because they are of short duration and attempts by the control logic to adjust to event conditions may be deleterious. An example is shift startup, such as the return from lunch: Everyone goes on line at the same time creating an abnormal demand surge. As described above, appropriate operation of the by-pass valve 46 can control this surge, temporarily rationing users as they build up local pressure while conserving upstream reserves and constraining active compressor capacity within stable demand limits. The invention can thus smooth event curves.

The invention provides, when properly practised by following the teachings herein, an air control unit system which is capable of maintaining a substantially constant downstream pressure while managing a wide range of flow conditions within a specified design capacity. An example of achievable control levels is a flow constancy of 3 percent or better of total flow ratings. A downstream pressure constancy within 1 percent is also achievable during wide, specified fluctuations in the upstream supply pressure. Source pressures of several hundred pounds, for example 500 kPa (225 psig), are suitable in practising the invention with lower working pressures being field-adjustable within a range of for example from 111.1 to 333.3 kPa (50 to 150 psig). Under such pressure conditions, air flows can be balanced to a value of 0.95 m³/s (200 cfm).

Desirably, for example, by using the configuration shown in Figure 1, adequate sub-unit capacity is provided for redundancy so that one sub-unit can be taken out of services while the others provide continual control at full air flow ratings.

It will further be apparent from a consideration of the foregoing disclosure, that the invention provides a means of balancing supply and demand in a compressed air system, especially a larger system on an air-mass or air-weight flow basis, giving a more meaningful and more efficient control than simple pressure-related control. In achieving this, it is important to pay due regard to temperature effects by determining temperatures at flow- and pressure-measurement points and applying appropriate compensation to the values detected, to standardize them.

Using accurate sensing and flow control equipment in conjunction with a logic controller, or computer device it becomes possible to determine not just the air-weight flow demands, but also their rates of change, which can be used to build some predictive capacity into the system. Further, comparison of demand patterns with historical records can improve the predictions to provide substantive probabilities of needed capacity in time for efficient management of the air compressors.

Thus, the unique air-control system of this invention further provides the wherewithal to manage a compressor bank in a novel and surprisingly efficient manner. The air demand information provided by the control system and its sensors can be used to time or sequence switching of the compressors. For example, newer, more efficient compressors may be run continuously while older units are brought on only at times of peak load. Also compressor activity can be sequenced according to the controllability and responsiveness of the particular compressor as well as its part-load operating efficiency.

Again in a large system, the demand area can be broken up into separate conduit zones for control purposes, the zones being demarcated by individual sensors or even by separate air control units 10. Then, data regarding storage pressure, mass flow and additional remote signals from the zones, preferably also with information as to the usage character of the zones, if they are so divided, and if such exists, can be interfaced with control means for multiple compressors to establish, with constant surveillance feedback, an optimal compressor sequence based upon individual compressor characteristics, including particularly their part-load efficiencies. Data from the zones can be weighted or adjusted to accommodate known, or predicted, air consumption characteristics.

### The following text is added July 10, 1992:

Air compressors can be divided into several categories, positive displacement in which a packet of air is compressed and discharged in a cyclic manner, being one major category. Dynamic compressors are another major category. Dynamic compressors continuously accelerate an air stream against an impact wall to compress it. Either or both of these types can be used as, or as components of air compressor 30 which in the latter event can also be a bank of air compressors. Rotary screw and reciprocating compressors are examples of positive compressors while dynamic compressors are usually centrifugal.

Such compressors can be used with various management and control techniques, some of which will be described hereinbelow. Preferably, however the compressor bank 30 is operated in conjunction with the intermediate system control described above and with additional inventive compressor management techniques to be described hereinbelow. Such new compressor management systems which are advantageous in improving the efficiency of an air compressor system, especially one employing multiple compressors and more especially compressors having different performance characteristics, are also applicable to systems in which the intermediate control system of this invention is not applied, but in common with the principles used in said intermediate control system, an important principle of compressor management under the auspices of the present invention, is that control techniques are responsive to downstream pressure or demand pressure, and that compressor loading and loading changes are managed according to a predictive model.

Such predictive models can be developed from first and second order time differentials of downstream or demand pressure. Preferably they are derived from air-mass or - weight flow determinations, and preferably also an air impedance is connected in air series between said compressors and said demand to improve said demand pressure determination. Also, in a preferred embodiment, said air impedance is variable, preferably between a wide open, full-flow non-resistive value and a fully closed value, and said impedance is adjusted to stabilize downstream pressure.

Machines in current use in industry generally have the capability to run in what is known as an on-line/off-line mode, meaning that an air compressor can be unloaded, or uncoupled from any working load, while leaving its drive running, but eliminating air flow through the machine itself. Controls vary with different types of compressor. A rotary screw compressor or rotary positive machine generally uses what is known as a modulating control. A modulating control is an air throttle valve at the delivery system intake, operating on the air compressor output to throttle air flow through the compressor. The valve opens and closes in approximately inverse proportion to the discharge air pressure seen by the compressor. As a result, when the compressor is operating, the inlet valve opens and closes, allowing more or less air to go through the machine to maintain what is intended to be a relatively constant pressure in the compressed air system.

To unload this machine there is a problem in that at partial load, for example at 70% capacity, determined by the delivery system inlet valve setting, the restriction imposed by the inlet valve creates a vacuum upstream of the valve. This increases pumping losses which lower the inlet air pressure seen by the air compressor. As a result, even though there is a reduced volumetric through-put of compressed air or of Freon by increasing the number of compression ratios that this machine must see, the brake horsepower driving the air will tend to be relatively flat.

Thus, using approximated round numbers to exemplify the point, a rotary screw machine that is running at 100% or lower loads such as 80% or 70% or lower, down to about a 40% load, may use about the same amount of horsepower as if it were operating at about a 90% load. There is a very flat degeneration of absorbed kilowatt input or absorbed horsepower. To unload this machine requires that the inlet valve be closed off totally and that the air/oil separator which is a basic component of a rotary positive machine be vented to atmosphere. When this occurs the compressor's horsepower loading can drop down into a range of about, 18 to 30% of the input brake horsepower.

A further problem with a rotary screw compressor is known as rotor rattle. As the compressor is unloaded, a thrust instability develops which ultimately can wear and destroy the air end itself. Consequently, rotary screw compressors are usually run in a modulating mode, driving at least some air load. Most current rotary screw compressors can, judiciously, be operated in an on-line/off-line configuration but great care must be exercised to limit the number of on-line/off-line cycles, to avoid serious mechanical problems which may lead to compressor failures.

Alternative designs to control rotary screw compressors have limited acceptance. One such design is a rotary turn valve mounted longitudinally within the air end housing. It runs on a helical screw and as a load is shed instead of throttling an inlet valve, the rotary valve is turned. It opens to by-pass some of the compressed air internally in the air end, relieving pressure back to an open section of the air end. This changes the displacement providing a better proportional control between the amount of air going through the compressor and the mode of driver input, which determines the horsepower consumption. This cam alleviates the pumping and throttling losses attributable to modulator valves.

Another compressor regulator comprises a series of poppet valves, controlled through a simple microprocessor, and mounted longitudinally in the air end. These poppet valves are opened and closed to change the rate of by-pass at the air end and to effect a reduction in air capacity and a somewhat proportional reduction in horsepower.

Other types of rotary machines, for example, non-lubricated rotary machines such as the Atlas Copco Z series are better adapted to run on-line/off-line. They have a variable load design that permits this, but again the reduced horsepower at a no-load condition can still be in the 15 to 18 or 20 percent range.

reciprocating, or piston driven compressors are more controllable at part-load. There are several methods of unloading a reciprocating compressor. Inlet valve regulation, known as IVR, or as sweep control, means simply that the inlet valves are held open. Air compressor valving operates barometrically. The differential pressure across the valve can increase until it springs open in the manner of a heavily spring-loaded check valves.

A single stage-machine, in which all the compression from atmosphere to discharge is done in one compression stage, is usually limited to about 266.7 kPa (120 psig) discharge, and requires inlet valve regulation or high pressure unloading. In the latter case a discharge valve is opened to isolate the compressor from the compressed air system. In either case horsepower is off-loaded to about 15 percent of the full load brake horsepower.

A two-stage machine provides more flexibility with regard to control techniques, which can include inlet valve regulation, (holding the inlet valve wide open). Another technique is known as total closure in which a suction valve is isolated by means of a secondary valve located upstream in the free air system. A further control technique comprises stepping the unloading to a combination of inlet valve regulation and volume bottles. In this technique, air is forced into a volume bottle about equal to the volumetric displacement of the cylinder, with zero compression.

Using a series of controlled steps it is possible to establish a five-step control system. A performance curve of a five-step controlled machine, shows a significant degree of proportionality between volumetric through-put and the input brake horsepower.
However, there are mechanical losses including inertial losses in the drive train; windage losses; lubrication losses; ancillary losses in driving oil pumps and other peripherals on the compressor, while still maintaining a reasonable degree of proportionality.

Centrifugal compressors which are dynamic by design and are not positive displacement are the most difficult to control and understand. In a centrifugal compressor air is taken in at the eye of one or more impellers and is discharged tangentially from the impeller. Centrifugal compressors usually operate in a number of compression stages commonly two, three or four stages in industrial applications. One problem with controlling centrifugal compressors is a phenomenon of surge. If the compressor is starved for through-put, for any one of a variety of reasons such as limitations of the inlet system itself, the position of inlet control valves, changes in inlet temperature (which affect the weight of the inlet air) can all put a centrifugal compressor into a surge condition. Surge means that the impellor vanes are only partially filled, in which case the air tries to expand prematurely. In doing this the machine will undergo cyclic surging alternating between acting as a compressor and as an expander. Surging is usually preceded by an incipient surge in which operating temperature rises gradually leading to an actual surge failure where the machine will no longer operate as a compressor. This is a fairly common problem.
Surging can be prevented by instantaneously isolating the machine from the downstream compressed load with a diverting valve that will forces the compressed air back to atmosphere. In a typical system, pressure modulating is sensed in an upstream valve as described for a screw machine. A flow sensor detects air flow and immediately opens a blow-off valve to blow air to atmosphere at the same time uncoupling the compressor aerodynamically from the rest of the air system.

The problem in terms of horsepower conversion is that while modulating the machine down provides a reduction in input brake horsepower (which is more dramatic than with a comparable screw machine) until the blow-off valve opens, at this point, the brake horsepower is restored to almost a full load condition which is wasted to atmosphere.

Other control techniques used with centrifugals include inlet guide vanes which divert the inlet air away from the eye of the impeller and you get a reduction, vecturally reduce volumetric throughput with a better reduction in horsepower. There are many ways of controlling centrifugal compressors.

A preferred operating profile is to base-load a rotary machine be it rotary positive or dynamic and trim with a reciprocating machine which has better controllability. Compressor sequencers are known to the art, rotary, reciprocal and centrifugal for example under the trademark TENDA MATIL from Ingersoll-Rand Co. Such a sequencer senses pressure and sequences compressors loading and unloading according to their size and on-load/off-load characteristics. Selection has to be made both on the size of the machine and also on its ultimate controllability.

As a first major parameter or two parameters, a sequencer is programmed both on the size of the compressor and on the suitability of the compressor.

Generally, a compressor sequencer works on air pressure. The pressure sensing from the compressor is transposed to the sequencer control. The sequencer control then matrixes which compressor will be appropriate for the need. The sequencer does one other thing too because it is a fairly simple matrix, it can even out the operating running time on the compressors by alternating them. A compressor sequencer according to this invention, however, responds to changes of system pressure and equates them back through the PLC which form stored data will recompute which compressor should be operating both by size and suitability and control.

The Ingersoll-Rand TENDA MATIL sequencer is a static pressure sensing device that transposes the pressure output to an electrical signal to output to a series of compressors which are then loaded and unloaded according to need. This is a reactive system.

The present invention is practised by sensing rate of change in system pressure, making the control function proactive rather than reactive. Based on the rate of change of pressure, a compressor can be selected for bringing on-line according to the suitability of its characteristics. There is also an opportunity to cancel an order for a start signal for such a selected compressor, before it comes on.

A drawback of prior art control systems is that when a transient event occurs, the next compressor in sequence is brought on line with attendant motor inrush current or imposition of elemental surge loads on the utility plus wear and tear on the compressor's mechanicals, even though the event that triggered the start up has passed. By sensing a rate of change of a pressure parameter, and changes in that rate of change, according to the invention, flexibility is gained.

If the rate of change (pressure reduction) decreases, it is possible to cancel the start signal with attendant energy savings and reduced mechanical maintenance. Most industrial drive motors must be limited to four starts per hour or less. Once started, the motor must typically run for a minimum of 15 minutes before a safe shutdown can be accomplished. In general, unless the system is dynamically pressure-balanced, imposed changes are antagonistic to some system characteristic which resists the desired result.

In typical industrial compressed air systems, system air pressure varies widely and sometimes wildly, and can cause the paradoxical situation that as system pressure tends to increase in response to reduced demand, overall demand because of the artificial demand induced by the higher system pressure, increases. This is a further drawback of prior art sequencers. Increasing the demand for air and starting more compressors tends to force the system pressure up higher, forcing more air in back of this impedance, the impedance or this artificial demand requires the addition of more horsepower and so on. This problem can be overcome by integrating a sequencer with means to balance the system, on a mass flow basis, namely the intermediate control unit 10.

The inventive intermediate control system described herein restructures the air system to a more efficient configuration. Air is metered out of the control unit at a constant pressure downstream thereof. The air impedance of the system is stabilized and surprisingly predictable at the constant distribution pressure. Primary storage is created by creating a controlled pressure peak across upstream storage volume which serves some of the transient events and surge loads that would normally would be seen as sudden demands requiring coverage by compressor horsepower. Effectively, two desirable ends are achieved at the same time. There is a predictable air impedance in the system, based on constant system pressure, the variable of artificial demand is substantially reduced or eliminated, If 0.5 m³/s (100 CFM) of demand at 356 N (80 lbs) is added, approximately that flow rate is what moves through the system. The inventive air system can be described as a positive displacement distribution chain. A particular weight pounds of air is used to operate a piece of equipment and is replaced directly with the same number of weight pounds of air at constant pressure, adjusted for constant temperature.

The air in storage constitutes an important time buffer which permits tuning the sequencers to an algorithm. This algorithm can run in response to a rate of change of demand system pressure. In a system with multiple compressors, a determination has to be made, based on the aforementioned parameters, as to which compressors should be base loading and which should be used for load trimming. This is again a function of control by the size of the compressor and its control lability of horsepower rating at reduced demand. The intermediate control enables the air system to become proactive, adjusting to predicted future demand, as opposed to reactive adjusting to historical demand. Peak horsepower can be supplemented with storage. For example suppose a pressure drop at the rate of 4.45 N (1 lb) per second is detected in the receiver tank, which then increases to 8.9 N (2 lb) per second, there is a clear indication of a growing demand to be met with additional horsepower. If circumstances now change through an equilibrium of balance within the system and instead of being 4.45 N (1 lb) per second it drops to 2.23 N (½ lb) per second, the differentiated pressure, or rate of change of pressure supply may start to get ahead of this new demand profile forestalling the need for addition of another compressor. With the control system of this invention that need can be cancelled before the compressor is added. The control system of the invention is carefully implemented to maintain constant downstream pressure. In doing this the sensed pressure changes or pressure differential are fed back through a proportional integral derivative loop and output the PLC through an IC back to the motor driving the valve. The motor driving the valve could either by pneumatically controlled motor or it could be an electronic positioned. We intended to use a pneumatic control because you get a faster response with them and speed of response is still one of the major design parameters that we have to maintain in an intermediate control. The other problem however with a pneumatic control is that we still have the additional hysteresis introduced by the pneumatic circuit from the electronic to the pneumatic signal and then ultimately a whole new valve is going to respond and control the main flow. An electronic positioner could provide the advantage of a more direct or immediate translation and it makes a very convenient way of stepping the number of modules that are going to be using in the IC. You simply take the, pick an example, a 4 to 20 mA and divide the 4 to 20 into several difference amperages
For example, the flow controllers 30, and possibly also the by-pass valve 48, may be operated in parallel within different ampere ranges, preferably from 1 to 6 milliamperes (mA) in each range. Thus, one flow controller may operate at from 4 to 8 mA, another at from 8 to 16 mA, and so on. Preferably these ranges are distinguished by a band gap of a milliampere or two.

A further important and valuable capability of the use of the intermediate control unit 10 in combination with a compressor sequencer is an ability to help hold a compressor or compressors within their specified performance ranges, especially with regard to output pressure.

Referring, for example, to a centrifugal compressor or compressor use as base load, the turned-on capability is limited and centrifugal compressors operate in a very narrowly defined performance band. If forced below or out of that band the compressor become what is termed as off-design. In the off-design state there are several undesired abnormalities. Flow and pressure become dramatically inverse as pressure increases in an off-design state, the flow rate drops and conversely if compressor discharge pressure is reduced, flow tends to increase, which leads to extreme anomalies in operation.

Still referring, for example, to a centrifugal compressor, but in an inventive system incorporating a control unit 10, downstream of the compressor to impose a selectable control delta P even though we are asking the compressor to climb up to a higher discharge pressure and imposing more brake? horsepower in this transaction, we are going force the compressor to operate in a much more efficient operating range probably back into an optimum design range.

The aerodynamic efficiency of the machine is substantially reduced at lower output pressure. This is especially true with a three- or four-stage centrifugal compressor, with intercoolers. Every time another intercooler and another stage are added, this off-design efficiency can drop still further.

By imposing a delta P through the use of a control unit 10, such a centrifugal can be moved into a better operating range, with an efficiency improvement that may be as high as 20 or 30 percent.

Further control advantages can be obtained by adding trim compressors to take additional loads in response to real-load demand pressure drops. These are pressure changes which have been screened by the predictive process of the invention to eliminate transients. Such trim compressors are preferably positive displacement compressors, typically reciprocating or rotary screw compressors. The trim compressors can be brought on line by a compressor sequencer working through an intermediate control unit 10. In a preferred embodiment, this control unit 10 is a second unit additional to a first unit controlling the output of one or more base load, typically centrifugal compressors.

The intermediate control unit 10 allows air to flow based on this sequence and the compressors will start to load and unload based on their own design capabilities and internal controls.

An advantage of this control system is that it can be managed so that the compressors are no longer sequenced for the sake of the system, but through one or more intermediate control units 10 controlling individual compressors or groups of compressors.
In this manner, the intermediate controls 10, rather than the compressors can be sequenced. With this arrangement, in the event that a centrifugal compressor, used for base load, goes into drawdown, control units 10 other than that for the down-drawing compressor, will start to come on line and start to load the compressors they control. Conventionally, if one centrifugal compressor is added to a compressor in an off-design state, the horsepower absorbed by the centrifugal remains roughly constant, while the air through-put reduces.

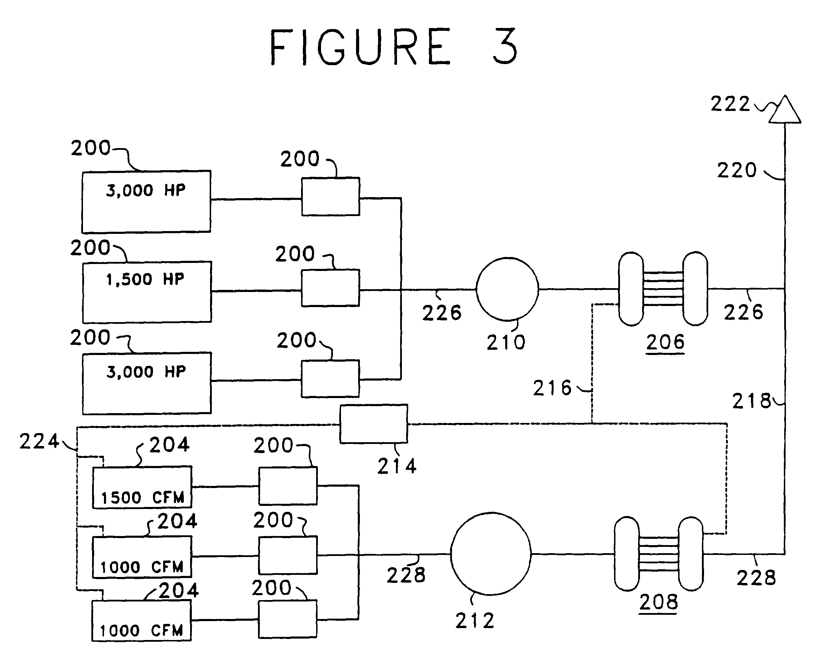

Referring to Figure 3 of the drawings, the air system shown schematically comprises base load bank of three centrifugal compressors 200, each outputting through a dryer 202 and three trim compressors 204, of positive displacement type, each also outputting through a dryer 202. The sum of storage upstream of a control unit, to be described is indicated schematically as base load primary storage 210 and trim load primary storage 212.

In the illustrative exemplary embodiment shown, two of the base load compressors 200 are rated at 2.2 MW (3,000 horsepower (HP)) and one is rated at 1.1 MW (1,500 HP). Comparably, two of the trim compressors are rated at 4.7 m³/s (1,000 CFM (cubic feet per minute)) and one is rated at 7.1 m³/s (1,500 CEM). The different rating methods are customary for the different types of compressor.

Each bank of compressors is supplied with its own intermediate control unit similar to the control unit 10 described above, namely a base load control unit 206 and a trim load control unit 208. A primary logic controller 214 receives pressure signal input, via line 216, from the upstream side of control unit 206 and via line 218 from the downstream or demand side of the control unit 208. the controller 214 outputs a control signal separately to each trim compressor 204 over a line 224.

The downstream outputs of the control units 206 and 208 are fed to the working equipment over a common air delivery conduit 220. Examples of possible operating pressures are, for the demand side of the system, substantially as seen by the articles or working equipment 177.8 kPa (80 psig) indicated at 222, 200 kPa (90 psig) in primary storage 210 for the base load output and 225.6-277.8 kPa (115-125 psig) in primary storage 212 for the trim load output.

The scenario depicted in Figure 3 is appropriate for centrifugal compressors rated at about 277.8 kPa (125 psig). Here, the base load control unit 206 imposes a pressure differential, a delta P, in a base load main air conduit 226 to raise the working pressure of the base load compressors to a preferred range near their rating, and substantially above the working system pressure or demand pressure of about 177.8 kPa (80 PSIG). Under this control, the centrifugal compressors are operating substantially more efficiently. Control unit 206 and its associated logic controller, which may be a separate unit or incorporated with logic controller 214, runs the base load compressors at a substantially constant rating. Demand fluctuations are handled by the trim compressors 214 which are loaded on and off line by control unit 214 until such point as the capacity is exceeded whereupon a base load compressor 200.

This inventive system is valuable in employing one or more trim compressors 204, generally of a lower rating and which better unloading characteristics than the centrifugal compressors have. Logic controller 214 can effectively, with appropriate algorithms and the control network described and illustrated, fulfil the role of a compressor sequenced selecting appropriate compressors to load or unload. The selection algorithm or algorithms preferably takes account not only of capacity and manageability of the various compressors in the system, but also of their on-load efficiency, including temperature-related efficiency, some compressors being substantially less efficient at high inlet temperatures, and also their off-load horsepower savings.

While an illustrative embodiment of the invention has been described above, it is, of course, understood that various modifications will be apparent to those of ordinary skill in the art. Such modifications are within the scope of the invention, which is limited and defined only by the appended claims.

## Claims

1. An air control system for a main conduit of a substantially continuous flow compressed air system, the compressed air system comprising compressed air supply means providing an air supply, air-operated equipment served by said compressed air supply means and providing an air demand and a main air supply conduit connected between said compressed air supply means and said air-operated equipment to channel said air supply to said air demand, said air supply being subject to fluctuation according to variations in said air supply means and in said air demand wherein said air control system comprises:
a) a variable adjustable flow control unit (10) for controlling air flow through said main air supply conduit, in use, said flow control unit (10) comprising a plurality of flow sub-units (12, 14) in parallel configuration;
b) pressure monitoring means (38) downstream of said flow control unit (10) and arranged to generate a pressure related demand signal, said demand signal fluctuating over time as a function of variations in said pressure; and
c) actuator means (36) for operating said flow control unit (10) in response to said demand signal to stabilize downstream air pressure thereby varying said air flow rate in said main air conduit according to downstream pressure variations; the flow control unit (10) further comprising a by-pass sub-unit (16) openable in response to a predetermined pressure difference across said flow control unit (10) to provide a substantially free-flow by-pass airway; the system further including available volumetric air capacity for storage upstream of said main air supply conduit;
the air control system being characterized in that the air system is of the type in which air-weight flow is controlled, each sub-unit (12, 14) being continuously variable to control air flow therethrough; and said flow control unit (10) is operative to constrain supply in said volumetric air capacity to prevent indiscriminate release of stored air, wherein each of said sub-units (12, 14) provides an independent air way between said air supply and said air demand, each said sub-units (12, 14) having its own flow controller (30) and said sub-units (12, 14) being adjusted co-operatively and sequentially for jointly controlling said air flow, a plurality of the sub-units (12, 14) being pneumatically interconnected and arranged to operate in unison, opening and closing to the same degree in response to the application of a given control signal.

2. An air control system as claimed in Claim 1, wherein a plurality of said sub-units (12) are coupled together to handle peak demand and a further trim sub-unit (14) is provided for controlling smaller off-peak loads, said trim sub-unit (14) being operable independently of said sub-unit (12).

3. An air control system as claimed in Claim 1, further comprising logic controller means (100) to process input signals from said pressure related demand signal and generate an output signal to operate said flow control unit (10).

4. An air control system as claimed in Claim 3, further comprising pressure sensor means (104) to sense demand pressure downstream of said flow controller and differential pressure sensor means (106) sensing pressure across said flow control unit (10) both said pressure means (104, 106) providing input signals to said logic controller means (100).

5. An air control system as claimed in Claim 3, wherein said logic controller (100) processes said demand input signal to determine rate of change of pressure related demand with time and applies said determination to adjustment of said flow control unit (10) to stabilize downstream air pressure.

6. A compressed air system comprising compressed air supply means providing an air supply, air operated equipment sewed by the compressed air supply means and providing an air demand, a main air supply conduit connected between said compressed air supply means and said air-operated equipment to channel said air supply to said air demand, said air supply being subject to fluctuation according to variations in said air supply means and in said air demand, and an air control system as claimed in Claim 1 for controlling the air-weight flow, wherein said compressed air supply means comprises a plurality of air compressors, the system further comprising compressor sequencing means responsive to said pressure related demand signal and operative to load and unload the compressors according to said demand signal in an energy-efficient manner.

7. A compressed air system comprising:
a) a plurality of air compressor units connected to a main feed supply duct, said compressor units having outputs which are mixed in said duct to provide a common pressurized air supply and including compressor units with differing performance characteristics related to energy efficiency;
b) useful air-powered equipment connectable in pneumatic-circuit with said common pressurized air supply downstream of said duct and providing a variable demand for said common pressurized air supply;
c) an air control system as claimed in Claim 1 for controlling air flow through said main air supply conduit, said flow control unit (10) providing a flow path in a full-open position said flow path being substantial non-constricting to air flow from said main feed duct;
d) detector means (38, 104, 106) to detect imbalances between air flow upstream of said flow control unit (10) and air flow downstream of said flow control unit (10); and
e) actuator means (36) to actuate said flow control unit (10) to reduce said imbalances;
wherein said air-powered equipment receives a controlled air supply and overall energy efficiency of said plurality of compressors is improved.

## Patentansprüche

1. Luftregeleinrichtung für einen Hauptkanal eines Druckluftsystems mit im wesentlichen kontinuierlicher Strömung, wobei das Druckluftsystem aufweist: eine Druckluftzuführeinrichtung, die eine Luftzuführung bewirkt; eine druckluftbetätigte Anlage, die durch die Druckluftzuführeinrichtung bedient wird und einen Luftbedarf liefert; und einen Hauptluftzuführkanal, der zwischen der Druckluftzuführeinrichtung und der druckluftbetätigten Anlage geschaltet ist, um die Luftzuführung auf den Luftbedarf auszurichten, wobei die Luftzuführung einer Schwankung entsprechend den Veränderungen in der Luftzuführeinrichtung und beim Luftbedarf unterliegt, worin die Luftregeleinrichtung aufweist:
a) eine veränderliche regulierbare Durchflußregelanlage (10) für das Regulieren des Luftstromes durch den Hauptluftzuführkanal beim Betrieb, wobei die Durchflußregelanlage (10) eine Vielzahl von Durchflußteilanlagen (12, 14) in einer parallelen Anordnung aufweist;
b) eine Drucküberwachungseinrichtung (38) stromabwärts von der Durchflußregelanlage (10) und so angeordnet, daß ein druckbezogenes Bedarfssignal erzeugt wird, wobei das Bedarfssignal über der Zeit als Funktion der Veränderungen des Druckes schwankt; und
c) eine Betätigungseinrichtung (36) für das Betätigen der Durchflußregelanlage (10) als Reaktion auf das Bedarfssignal, um den Luftdruck stromabwärts zu stabilisieren, wodurch die Luftdurchflußgeschwindigkeit im Hauptluftkanal entsprechend den Druckveränderungen stromabwärts verändert wird; wobei die Durchflußregelanlage (10) außerdem eine Umgehungsteilanlage (16) aufweist, die als Reaktion auf einen vorgegebenen Druckunterschied über die Durchflußregelanlage (10) geöffnet werden kann, um einen Umgehungsluftweg mit im wesentlichen ungehindeter Strömung bereitzustellen; wobei die Einrichtung außerdem eine verfügbare volumetrische Luftkapazität für die Speicherung stromaufwärts vom Hauptluftzuführkanal umfaßt;
wobei die Luftregeleinrichtung dadurch gekennzeichnet ist, daß die Lufteinrichtung in einer Ausführung vorliegt, bei der der Luftmassenstrom reguliert wird, wobei eine jede Teilanlage (12, 14) kontinuierlich veränderlich ist, um den Luftstrom dort hindurch zu regeln; und die Durchflußregelanlage (10) wirksam ist, um die Zuführung hinsichtlich volumetrischer Luftkapazität einzuschränken, um die wahllose Freigabe von gespeicherter Luft zu verhindern, worin jede der Teilanlagen (12, 14) einen unabhängigen Luftweg zwischen der Luftzuführung und dem Luftbedarf bereitstellt, wobei jede der Teilanlagen (12, 14) ihren eigenen Durchflußregler (30) besitzt, und wobei die Teilanlagen (12, 14) zusammenwirkend und sequentiell für ein gemeinsames Regeln des Luftstromes reguliert werden, wobei eine Vielzahl von Teilanlagen (12, 14) pneumatisch miteinander verbunden und so angeordnet ist, daß sie in Übereinstimmung funktionieren, wobei sie in gleichem Umfang als Reaktion auf die Anwendung eines bestimmten Regelsignals öffnen und schließen.

2. Luftregeleinrichtung nach Anspruch 1, bei der eine Vielzahl von Teilanlagen (12) miteinander gekoppelt ist, um einen maximalen Bedarf zu bringen, und eine weitere Einstellteilanlage (14) für das Regeln kleinerer Normalbelastungen bereitgestellt wird, wobei die Einstellteilanlage (14) unabhängig von der Teilanlage (12) betriebsfähig ist.

3. Luftregeleinrichtung nach Anspruch 1, die außerdem eine Logikregeleinrichtung (100) aufweist, um Eingangssignale vom druckbezogenen Bedarfssignal zu verarbeiten, und um ein Ausgangssignal zu erzeugen, um die Durchflußregelanlage (10) zu betätigen.

4. Luftregeleinrichtung nach Anspruch 3, die außerdem aufweist: eine Druckmeßfühlereinrichtung (104), um den Druckbedarf stromabwärts vom Durchflußregler zu messen; und eine Differenzdruckmeßfühlereinrichtung (106), die den Duck über der Durchflußregelanlage (10) mißt, wobei beide Druckeinrichtungen (104, 106) Eingangssignale für die Logikregeleinrichtung (100) liefern.

5. Luftregeleinrichtung nach Anspruch 3, bei der der Logikregler (100) das Bedarfseingangssignal verarbeitet, um die Geschwindigkeit der Veränderung des druckbezogenen Bedarfs mit der Zeit zu ermitteln, und die Ermittlung bei der Regulierung der Durchflußregelanlage (10) zur Anwendung bringt, um den Luftdruck stromabwärts zu stabilisieren.

6. Drucklufteinrichtung, die aufweist: eine Druckluftzuführeinrichtung, die eine Luftzuführung bewirkt; eine druckluftbetätigte Anlage, die durch die Druckluftzuführeinrichtung bedient wird und einen Luftbedarf liefert; einen Hauptluftzuführkanal, der zwischen der Druckluftzuführeinrichtung und der druckluftbetätigten Anlage geschaltet ist, um die Luftzuführung auf den Luftbedarf auszurichten, wobei die Luftzuführung einer Schwankung entsprechend den Veränderungen in der Luftzuführeinrichtung und beim Luftbedarf unterliegt; und eine Luftregeleinrichtung nach Anspruch 1 für das Regulieren des Luftmassenstromes, worin die Druckluftzuführeinrichtung eine Vielzahl von Luftverdichtern aufweist, wobei die Einrichtung außerdem eine Verdichterfolgesteuereinrichtung aufweist, die auf das druckbezogene Bedarfssignal anspricht und wirksam ist, um die Verdichter entsprechend dem Bedarfssignal in einer energiewirksamen Weise zu belasten und zu entlasten.

7. Drucklufteinrichtung, die aufweist:
a) eine Vielzahl von Luftverdichteranlagen, die mit einem Hauptzuführungskanal verbunden sind, wobei die Verdichteranlagen Fördermengen aufweisen, die im Kanal gemischt werden, um eine gemeinsame Druckluftzuführung zu bewirken, und Verdichteranlagen mit unterschiedlichen Leistungscharakteristiken in Beziehung zum energetischen Wirkungsgrad umfassen;
b) eine nützliche druckluftbetriebene Anlage, die in einen pneumatischen Kreislauf mit der gemeinsamen Druckluftzuführung stromabwärts vom Kanal geschaltet werden kann und einen veränderlichen Bedarf für die gemeinsame Druckluftzuführung bereitstellt;
c) eine Luftregeleinrichtung nach Anspruch 1 für das Regeln des Luftstromes durch den Hauptluftzuführkanal, wobei die Durchflußregelanlage (10) einen Strömungsweg in einer vollständig offenen Position bereitstellt, wobei der Strömungsweg im wesentlichen für den Luftstrom vom Hauptzuführungskanal nicht einschränkend ist;
d) eine Detektoreinrichtung (38, 104, 106), um Instabilitäten zwischen dem Luftstrom stromaufwärts von der Durchflußregelanlage (10) und einem Luftstrom stromabwärts von der Durchflußregelanlage (10) nachzuweisen; und
e) eine Betätigungseinrichtung (36), um die Durchflußregelanlage (10) zu betätigen, um die Instabilitäten zu verringern;
worin die druckluftbetätigte Anlage eine geregelte Luftzuführung empfängt und der gesamte energetische Wirkungsgrad der Vielzahl von Verdichtern verbessert wird.

## Revendications

1. Système de régulation d'air pour un conduit principal d'un système d'air comprimé à écoulement sensiblement continu, le système d'air comprimé comprenant un moyen d'alimentation en air comprimé jouant le rôle d'une alimentation en air, un équipement à commande pneumatique servi par ledit moyen d'alimentation en air comprimé et produisant une demande en air, et un conduit d'alimentation en air principal relié entre ledit moyen d'alimentation en air comprimé et ledit équipement à commande pneumatique, afin d'acheminer ladite alimentation en air à ladite demande en air, ladite alimentation en air étant soumise à des fluctuations en fonction des variations dans ledit moyen d'alimentation en air et dans ladite demande en air, ledit système de régulation d'air comprenant:
a) une unité de régulation d'écoulement à réglage variable (10) destiné à réguler l'écoulement d'air à travers ledit conduit d'alimentation en air principal, en fonctionnement, ladite unité de régulation d'écoulement (10) comprenant une pluralité d'unités secondaires d'écoulement (12, 14) montées en parallèle;
b) un moyen de contrôle de pression (38) en aval de ladite unité de régulation d'écoulement (10) et disposé de façon à produire un signal de demande associé à la pression, ledit signal de demande fluctuant dans le temps en fonction des variations de ladite pression; et
c) un moyen d'actionnement (36) destiné à actionner ladite unité de régulation d'écoulement (10) en réponse audit signal de demande, afin de stabiliser la pression d'air en aval, en faisant varier ainsi ledit débit d'air dans ledit conduit d'air principal selon les variations de pression et aval; l'unité de régulation d'écoulement (10) comprenant en outre une unité secondaire de dérivation (16) pouvant s'ouvrir et réponse à une différence de pression prédéterminée à travers l'unité de régulation d'écoulement (10), afin de créer une galerie d'aérage de dérivation sensiblement indépendante de l'écoulement; le système comportant et outre une capacité d'air volumétrique disponible de stockage en amont dudit conduit d'alimentation en air principal;
le système de régulation d'air étant caractérisé en ce que le système d'air est du type dans lequel le flux air-poids est régulé, chaque unité secondaire (12, 14) étant variable en continu de façon à réguler l'écoulement d'air qui la traverse; et ladite unité de régulation d'écoulement (10) est apte à fonctionner pour freiner l'alimentation dans ladite capacité d'air volumétrique afin d'empêcher tout dégagement d'air stocké non sélectif, chacune desdites unités secondaires (12, 14) crée une, galerie d'aérage indépendante entre ladite alimentation en air et ladite demande en air, chacune desdites unités secondaires (12, 14) possédant son propre régulateur de débit (30), et lesdites unités secondaires (12, 14) étant réglées de façon coopérative et séquentielle afin de réguler conjointement ledit écoulement d'air, une pluralité des unités secondaires (12, 14) étant interconnectée de façon pneumatique et disposée de manière à fonctionner de concert, s'ouvrant et se fermant au même degré en réponse à l'application d'un signal de commande donné.

2. Système de régulation d'air selon la revendication 1, dans lequel une pluralité desdites unités secondaires (12) sont couplées les unes aux autres afin de traiter toute demande de pointe, et une unité secondaire supplémentaire de compensation (14) est prévue pour réguler de plus petites charges hors-pointe, ladite unité secondaire de compensation (14) pouvant être mise en fonctionnement indépendamment de ladite unité secondaire (12).

3. Système de régulation d'air selon la revendication 1, comprenant en outre un moyen formant régisseur logique (100) destiné à traiter les signaux d'entrée à partir dudit signal de demande associé à la pression et à produire un signal de sortie destiné à commander ladite unité de régulation d'écoulement (10).

4. Système de régulation d'air selon la revendication 3, comprenant en outre un moyen formant capteur de pression (104) destiné à capter toute pression de demande en aval dudit régulateur de débit, et un moyen formant capteur de pression différentielle (106) captant la pression à travers ladite unité de régulation d'écoulement (10), lesdits moyens de pression (104, 106) fournissant tous les deux des signaux d'entrée audit moyen formant régisseur logique (100).

5. Système de régulation d'air selon la revendication 3, dans lequel ledit régisseur logique (100) traite ledit signal d'entrée de demande afin de déterminer le taux de variation de la demande associée à la pression avec le temps, et applique ladite détermination au réglage de ladite unité de régulation d'écoulement (10), afin de stabiliser la pression d'air en aval.

6. Système d'air comprimé comprenant un moyen d'alimentation en air comprimé jouant le rôle d'une alimentation en air, un équipement à commande pneumatique servi par le moyen d'alimentation en air comprimé et produisant une demande en air, un conduit d'alimentation en air principal relié entre ledit moyen d'alimentation en air comprimé et ledit équipement à commande pneumatique, afin d'acheminer ladite alimentation en air à ladite demande en air, ladite alimentation en air étant soumise à des fluctuations en fonction des variations dans ledit moyen d'alimentation en air et dans ladite demande en air, et un système de régulation d'air selon la revendication 1 destiné à réguler le flux air-poids, dans lequel ledit moyen d'alimentation en air comprimé comprend une pluralité de compresseurs d'air, le système comprenant en outre un moyen de mise en séquence de compresseur sensible audit signal de demande associé à la pression et apte à fonctionner pour charger et décharger d'une manière économe en énergie les compresseurs selon ledit signal de demande.

7. Système d'air comprimé comprenant:
a) une pluralité d'unités formant compresseurs d'air reliées à un conduit d'alimentation principal, lesdites unités formant compresseurs comportant des sorties qui sont mélangées dans ledit conduit, de façon à créer une alimentation en air sous pression commune, et comprenant des unités formant compresseurs avec différentes caractéristiques de performance associées au rendement énergétique;
b) un équipement à commande pneumatique utile pouvant être relié dans un circuit pneumatique à ladite alimentation en air sous pression commune en aval dudit conduit, et produisant une demande variable à ladite alimentation en air sous pression commune;
c) un système de régulation d'air selon la revendication 1 destiné à réguler l'écoulement d'air traversant ledit conduit d'alimentation en air principal, ladite unité de régulation d'écoulement (10) créant un chemin d'écoulement dans une position complètement ouverte, ledit chemin d'écoulement n'étranglant quasiment pas l'écoulement d'air issu dudit conduit d'alimentation principal;
d) des moyens formant capteurs (38, 104, 106) destinés à capter les déséquilibres entre l'écoulement d'air en amont de ladite unité de régulation d'écoulement (10) et l'écoulement d'air on aval de ladite unité de régulation d'écoulement (10); et
e) un moyen d'actionnement (36) destiné à actionner ladite unité de régulation d'écoulement (10), de façon à réduire lesdits déséquilibres;
dans lequel ledit équipement à commande pneumatique reçoit une alimentation en air régulée, et le rendement énergétique global de ladite pluralité de compresseurs est amélioré.
